# EUROPEAN PATENT APPLICATION

(11) **EP 4 830 601 A1**
(43) Date of publication of application: **28.10.2026**
(21) Application number: 26168152.2
(22) Date of filing: 26.03.2026
(51) Int. Cl.: A47J 31/60

(54) **SOLID DETERGENT DISPENSING APPARATUS AND BEVERAGE MACHINE**

(30) Priority: 25.04.2025 CN 202510533721
(71) Applicant: Kalerm Technology (Suzhou) Co., Ltd, Suzhou Jiangsu 215134 (CN)
(72) Inventor: WANG, Hongming, Suzhou, 215134 (CN); LU, De'an, Suzhou, 215134 (CN); HUANG, Biao, Suzhou, 215134 (CN)
(74) Representative: Murgitroyd & Company

(57) **Abstract**

A solid detergent dispensing apparatus (1) includes: a housing (10); a first dispensing channel (20), configured to convey a solid detergent; a feeding member (40), rotatably connected within the housing (10), the feeding member (40) being provided with a transfer position (41), the feeding member (40) having receiving and dropping positions; when the feeding member (40) is in the receiving position, the solid detergent in the first dispensing channel (20) is conveyed from a first discharge outlet (22) into the transfer position; when the feeding member (40) is in the dropping position, the solid detergent in the transfer position falls into a target cleaner; a motor (50); a transmission mechanism driven by the motor (50), the transmission mechanism being drivingly connected to the feeding member (40) for driving the feeding member (40) to reciprocally swing between the receiving position and the dropping position. The present invention has an overall simple and compact structure, high dispensing efficiency, and may simultaneously ensure stability and durability of the apparatus.

## Description

### TECHNICAL FIELD

The present invention relates to the field of beverage preparation technologies, and in particular, to a solid detergent dispensing apparatus and a beverage machine.

### BACKGROUND

During the use of a beverage machine such as a coffee machine, its internal components such as a brewer and other target cleaners need to be cleaned regularly to ensure a quality of a beverage and a service life of equipment. A solid detergent is a commonly used cleaning medium. Cleaning operations may be performed by dispensing the solid detergent into the target cleaner of the beverage machine and then dissolving the solid detergent to obtain a cleaning solution.

In the prior art, a solid detergent dispensing apparatus has a complex structure, utilizes a large number of components, and involves complicated controls. This not only occupies a relatively large volume but also results in high cost, thereby affecting efficiency and reliability of cleaning in the beverage machine.

### SUMMARY

The object of the present invention is to provide a solid detergent dispensing apparatus, which has a simple and compact structure as well as high reliability.

To achieve the above object, the present invention provides a solid detergent dispensing apparatus, applied to a beverage machine, and including:
a housing;
a first dispensing channel, wherein the first dispensing channel is configured to convey a solid detergent, and the first dispensing channel has a first feed inlet and a first discharge outlet;
a feeding member, wherein the feeding member is rotatably connected within the housing, the feeding member is provided with a transfer position, and the feeding member has a receiving position and a dropping position; when the feeding member is in the receiving position, the transfer position corresponds in position to the first discharge outlet, and the solid detergent in the first dispensing channel is conveyed from the first discharge outlet into the transfer position; and when the feeding member is in the dropping position, the transfer position corresponds in position to a target cleaner of the beverage machine, and the solid detergent in the transfer position falls into the target cleaner;
a motor, disposed on the housing; and
a transmission mechanism, where the transmission mechanism is driven by the motor, the transmission mechanism is in transmission connection with the feeding member for driving the feeding member to reciprocally swing between the receiving position and the dropping position.

In technical solutions of the present invention, the feeding member adopts a reciprocating swing structure. The feeding member performs reciprocating motion between the receiving position and the dropping position without requiring a full rotation. This results in a simple structure and a small volume. Simple and efficient dispensing is maintained, and possibility of solid detergent jamming can also be reduced, thereby ensuring overall stability and durability of the apparatus.

As a further improvement of an embodiment of the present invention, the transmission mechanism includes a push rod driven by the motor, the push rod is provided with a first tooth portion, the feeding member is provided with a second tooth portion, and the first tooth portion meshes with the second tooth portion.

In technical solutions of this embodiment, by means of meshing between the first tooth portion of the push rod and the second tooth portion of the feeding member, the feeding member can be driven by the push rod to reciprocally swing.

As a further improvement of an embodiment of the present invention, the motor is configured as a linear stepper motor; and
the solid detergent dispensing apparatus further includes a control module for acquiring an operating state of the motor and determining position information of the feeding member according to the operating state of the motor.

In technical solutions of this embodiment, the linear stepper motor may be directly connected to the push rod to drive the push rod to move, without the need for additional transmission mechanisms, thereby simplifying an overall structure and providing simple control. Driven by the linear stepper motor, the feeding member achieves reciprocating swinging to automatically dispense the solid detergent. Without the need for an additional position detection device for the feeding member, the linear stepper motor only needs to perform an on/off function, thereby greatly simplifying a hardware structure and software control, and reducing manufacturing cost and control complexity.

The present invention also provides a beverage machine, which includes a main unit, a target cleaner is provided inside the main unit, the solid detergent dispensing apparatus according to any of the above embodiments is provided on the main unit, and the solid detergent dispensing apparatus is configured to dispense a solid detergent into the target cleaner.

The present invention is set out in the appended set of claims.

### BRIEF DESCRIPTION OF THE DRAWINGS

FIG. 1 is a schematic perspective diagram of a solid detergent dispensing apparatus provided by a first embodiment of the present invention.
FIG. 2 is a schematic diagram of a feeding member of the solid detergent dispensing apparatus shown in FIG. 1 in a receiving position.
FIG. 3 is a schematic diagram of a feeding member of the solid detergent dispensing apparatus shown in FIG. 1 in a dropping position.
FIG. 4 is a schematic diagram of a solid detergent dispensing apparatus provided by another embodiment of the present invention.
FIG. 5 is a schematic perspective diagram of a solid detergent dispensing apparatus provided by a second embodiment of the present invention.
FIG. 6 is a schematic perspective diagram of the solid detergent dispensing apparatus shown in FIG. 5 with a cover body hidden.
FIG. 7 is a schematic perspective diagram of an internal structure of the solid detergent dispensing apparatus shown in FIG. 5.
FIG. 8 is a schematic perspective diagram of a solid detergent dispensing apparatus provided by a third embodiment of the present invention.
FIG. 9 is a schematic diagram of a feeding member of the solid detergent dispensing apparatus shown in FIG. 8 in a receiving position.
FIG. 10 is a schematic diagram of a feeding member of the solid detergent dispensing apparatus shown in FIG. 8 in a dropping position.

### Description of reference numerals:

solid detergent dispensing apparatus 1;
housing 10; first stop structure 11; second stop structure 12; accommodating space 13; dregs leakage port 14; first sensor 15; second sensor 16; and dropping port 17;
first dispensing channel 20; first feed inlet 21; first discharge outlet 22; partition plate 23; sub-channel 24; tapered section 25; and accommodating portion 26;
second dispensing channel 30; second feed inlet 31; and second discharge outlet 32;
feeding member 40; transfer position 41; second tooth portion 42; first contact surface 43; second contact surface 44; and first connection structure 45;
motor 50;
push rod 61; and first tooth portion 62;
agitating member 70; cam transmission mechanism 71; guide groove 72; and second connection structure 46; and
cover body 80.

### DETAILED DESCRIPTION OF THE EMBODIMENTS

The present invention is described in detail below in conjunction with specific embodiments shown in drawings. However, these embodiments are not intended to limit the present invention, and structural, methodological, or functional modifications made by those skilled in the art based on these embodiments shall all included within the protection scope of the present invention.

It should be understood that spatial relative terms such as "on", "above", "below", "under", used herein are for a purpose of facilitating description to describe a relationship of a unit or feature relative to another unit or feature shown in the drawings. The spatial relative terms are intended to encompass different orientations of a device in use or operation in addition to the orientation depicted in the figures.

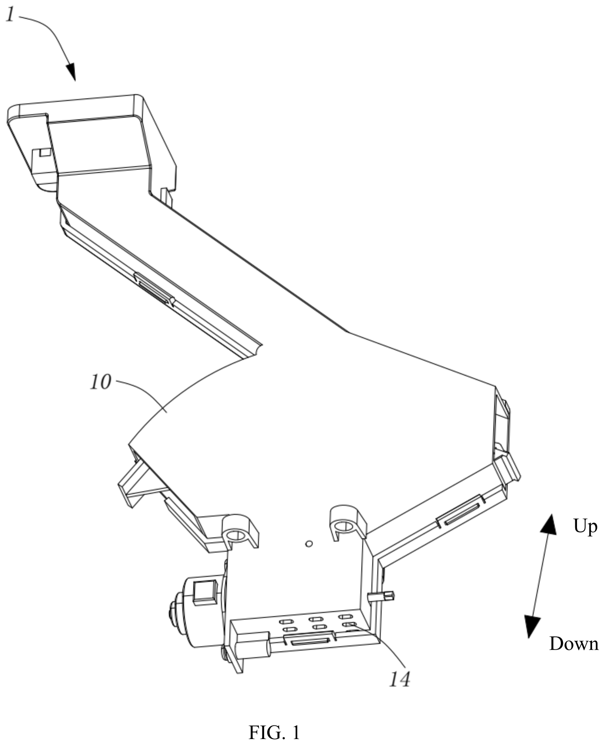

With reference to FIG. 1 to FIG, 3, a solid detergent dispensing apparatus 1 according to a first embodiment provided by the present invention is shown.

This solid detergent dispensing apparatus 1 is applied to a beverage machine.

The beverage machine may be a coffee machine or a tea brewing machine. The beverage machine includes a main unit. A target cleaner may be disposed inside the main unit. The solid detergent dispensing apparatus 1 is used for dispensing a solid detergent into the target cleaner. The target cleaner may be a brewer, a cleaning water tank, or the like. The solid detergent is dispensed into the target cleaner and can be dissolved in water to form a cleaning solution.

The beverage machine may also be provided with a cleaning program. A user may control the beverage machine to execute the cleaning program. When the beverage machine executes the cleaning program, the beverage machine is automatically cleaned by the cleaning solution inside the target cleaner.

In this embodiment, the solid detergent dispensing apparatus 1 includes a housing 10, a first dispensing channel 20, a feeding member 40, a motor 50, and a transmission mechanism.

The housing 10 may serve as an external support structure of the solid detergent dispensing apparatus 1, used for accommodating and fixing other components.

The first dispensing channel 20 is used for conveying the solid detergent. The first dispensing channel 20 has a first feed inlet 21 and a first discharge outlet 22. The solid detergent can enter the first dispensing channel 20 via the first feed inlet 21 and then be discharged from the first dispensing channel 20 via the first discharge outlet 22. The solid detergent fed into the first dispensing channel 20 can be temporarily stored in the first dispensing channel 20.

The feeding member 40 is rotatably connected within the housing 10. The feeding member 40 is provided with a transfer position 41. The transfer position 41 is used for temporarily accommodating and conveying the solid detergent. The transfer position 41 may be groove-shaped, and its size may be adapted to the solid detergent.

In this embodiment, the feeding member 40 has a receiving position and a dropping position.

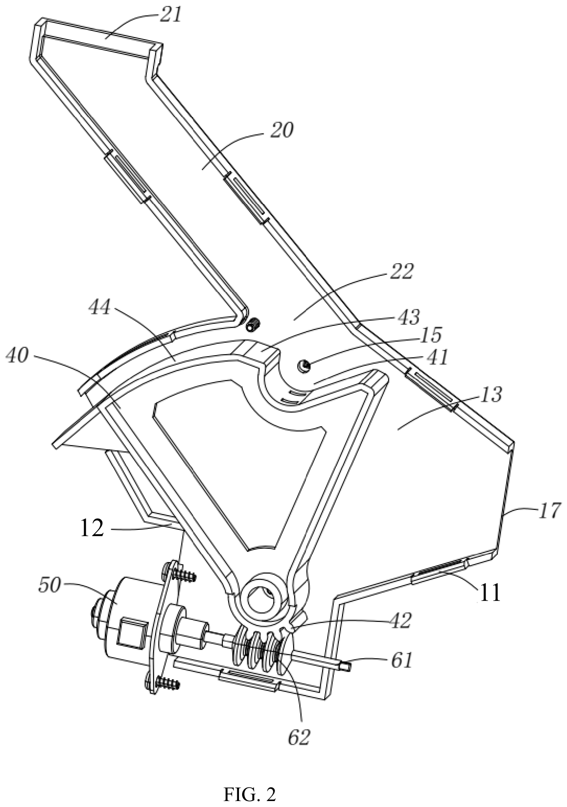

With reference to FIG. 2, the feeding member 40 in FIG. 2 is in the receiving position. When the feeding member 40 is in the receiving position, the transfer position 41 of the feeding member 40 corresponds in position to the first discharge outlet 22. The solid detergent in the first dispensing channel 20 can be conveyed from the first discharge outlet 22 into the transfer position 41.

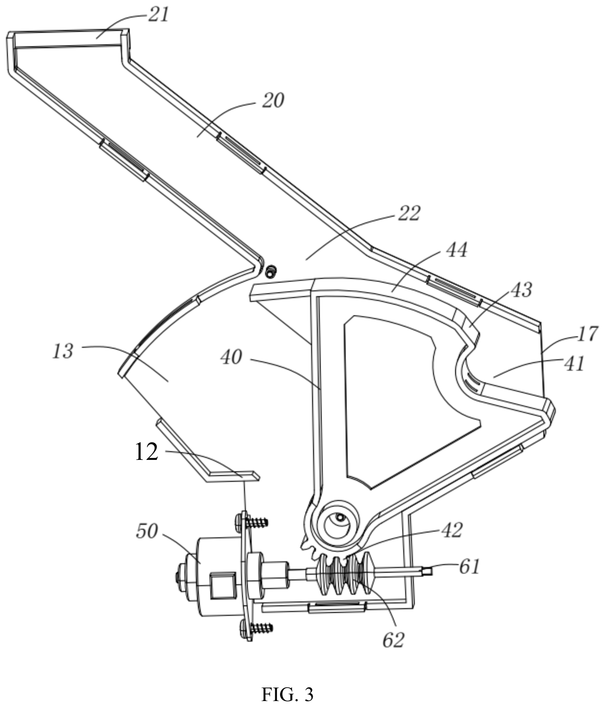

With reference to FIG. 3, the feeding member 40 in FIG. 3 is in the dropping position. When the feeding member 40 is in the dropping position, the transfer position 41 corresponds in position to the target cleaner of the beverage machine. At this time, the solid detergent in the transfer position 41 can fall from the transfer position 41 into the target cleaner. In the target cleaner, the solid detergent can be dissolved and mixed with water to form a cleaning solution.

In a specific embodiment shown in FIG. 3, the housing 10 is also provided with a dropping port 17. The transfer position 41 is a groove. When the feeding member 40 is in the dropping position, a groove wall of the transfer position 41 is inclined downwards relative to a horizontal plane. Therefore, the solid detergent stored in the transfer position 41 may smoothly slide down along the groove wall of the transfer position 41 under gravity and enter the target cleaner through the dropping port 17.

In this embodiment, the motor 50 is disposed on the housing 10. The motor 50 is used for providing power for the entire apparatus. Driven by the motor 50, the feeding member 40 can move between the receiving position and the dropping position. Under driving action of the motor 50, a movement process of the feeding member 40 is smooth and controllable, thereby ensuring that the solid detergent can be accurately conveyed into the target cleaner.

Compared with manual dispensing of a solid detergent, the solid detergent dispensing apparatus 1 can achieve automatic dispensing of a solid detergent, which can reduce tediousness of manual operations, improve dispensing efficiency and accuracy, enhance an automation level of the beverage machine, and provide users with more convenient user experience.

The transmission mechanism is driven by the motor 50. The transmission mechanism is in transmission connection with the feeding member 40 for driving the feeding member 40 to reciprocally swing between the receiving position and the dropping position.

In this embodiment, reciprocating swinging may be the feeding member 40 reciprocally rotating within a certain angular range, rather than making a full rotation.

A working process of the solid detergent dispensing apparatus 1 of this embodiment is as follows. When the feeding member 40 is in the receiving position, the transfer position 41 corresponds in position to the first discharge outlet 22, as specifically shown in FIG. 2. At this time, the solid detergent in the first dispensing channel 20 directly falls from the first discharge outlet 22 into the transfer position 41. When the solid detergent dispensing apparatus 1 is activated, the motor 50 rotates forward, and the motor 50 drives the feeding member 40 to rotate in a first direction via the transmission mechanism. When the motor 50 drives the feeding member 40 to rotate by a certain angle, the feeding member 40 moves to the dropping position. The angle may be less than 180°. FIG. 3 shows a schematic diagram of the feeding member 40 in the dropping position.

When the feeding member 40 moves to the dropping position, the solid detergent in the transfer position 41 can slide directly from the transfer position 41 into the target cleaner under its own gravity, thereby achieving automatic conveyance of the solid detergent from the first dispensing channel 20 to the target cleaner.

After the solid detergent is dispensed into the target cleaner, the motor 50 reverses. The motor 50 drives the feeding member 40 to rotate by a certain angle in a second direction opposite to the first direction via the transmission mechanism, so that the feeding member 40 resets from the dropping position to the receiving position.

The reciprocally swinging feeding member 40 in the solid detergent dispensing apparatus 1 provided by this embodiment is different from a traditional full rotation method. The feeding member 40 only needs to move between the receiving position and the dropping position, thereby simplifying a structure and control complexity. The full rotation method often requires an arrangement of a sensor to sense/detect a position and a state of a feeding member, which not only occupies a large space but also involves cumbersome and error-prone control.

A design of the reciprocating swinging of the feeding member 40 not only reduces unnecessary mechanical movement and improves operating efficiency of the apparatus, but also reduces energy consumption. In addition, since a movement range of the feeding member 40 is limited, wear and tear that may be caused by long-term continuous rotation is also reduced, thereby extending a service life of equipment. In summary, the solid detergent dispensing apparatus 1 provided by this embodiment maintains simple and efficient dispensing, and also ensures stability and durability of the equipment.

Further, in an embodiment of the present invention, the transmission mechanism includes a push rod 61 driven by the motor 50. The push rod 61 is provided with a first tooth portion 62. The feeding member 40 is provided with a second tooth portion 42, and the first tooth portion 62 meshes with the second tooth portion 42.

The push rod 61 is connected to the motor 50. The motor 50 drives the push rod 61 to rotate. A portion of the feeding member 40 provided with the second tooth portion 42 is arc-shaped.

By means of meshing between the first tooth portion 62 of the push rod 61 and the second tooth portion 42 of the feeding member 40, the feeding member 40 can be driven by the push rod 61 to reciprocally swing.

Further, in an embodiment of the present invention, the motor 50 is configured as a linear stepper motor 50.

The linear stepper motor 50 may be directly connected to the push rod 61 to drive the push rod 61 to move, without the need for additional transmission mechanisms, thereby simplifying an overall structure and providing simple control.

In this embodiment, the solid detergent dispensing apparatus 1 also includes a control module. The control module is used for acquiring an operating state of the motor 50 and determining position information of the feeding member 40 according to the operating state of the motor 50.

In this embodiment, the operating state of the motor 50 may be the number of operating steps of the motor 50. According to the operating state of the motor 50, it may be directly determined whether the feeding member 40 has moved to the receiving position or the dropping position.

In a technical solution of this embodiment, driven by the linear stepper motor 50, the feeding member 40 achieves reciprocating swinging to automatically dispense the solid detergent. Without the need for an additional position detection device for the feeding member 40, the linear stepper motor 50 only needs to perform an on/off function, thereby greatly simplifying a hardware structure and software control, and reducing manufacturing cost and control complexity.

In this embodiment, the solid detergent dispensing apparatus 1 may also include a first sensor 15. The first sensor 15 may be a photoelectric sensor, such as a single-sided optocoupler or a through-beam optocoupler. When the feeding member 40 is in the receiving position, the first sensor 15 is triggered to detect whether the solid detergent is stored in the transfer position 41.

When the feeding member 40 is in the receiving position, if the first sensor 15 detects that the solid detergent is stored in the transfer position 41, the motor 50 may be controlled to rotate forward, driving the feeding member 40 to move to the dropping position, thereby automatically dispensing the solid detergent in the transfer position 41 into the target cleaner.

When the feeding member 40 is in the receiving position, but the first sensor 15 detects that the solid detergent is not stored in the transfer position 41, it may be determined that the solid detergent in the first dispensing channel 20 is exhausted at this time, or a fault such as jamming of the solid detergent has occurred, and users may be prompted. The users may supplement a solid detergent into the first dispensing channel 20 via the first feed inlet 21, or clean the jammed solid detergent. Thus, operational stability of the solid detergent dispensing apparatus 1 may be further ensured.

Further, in an embodiment of the present invention, the feeding member 40 includes a first contact surface 43. The first contact surface 43 has a first end connected to the transfer position 41 and a second end opposite to the first end. The first contact surface 43 is disposed inclined towards the transfer position 41, and the first contact surface 43 may be configured as a guiding inclined surface.

When the feeding member 40 is in the receiving position, the first contact surface 43 at least partially blocks the first discharge outlet 22, and the second end is higher than the first end.

In this embodiment, when the feeding member 40 is in the receiving position, since the first contact surface 43 at least partially blocks the first discharge outlet 22, under gravity of the solid detergent, the solid detergent near the first discharge outlet 22 in the first dispensing channel 20 contacts the first contact surface 43.

When the feeding member 40 moves from the receiving position to the dropping position, the first contact surface 43 moves. Due to an inclined design of the first contact surface 43, the solid detergent in close contact with the first contact surface 43 may be slightly moved up and down, thereby agitating other solid detergents in the first dispensing channel 20, thus effectively preventing the solid detergent from jamming.

Further, in an embodiment of the present invention, the feeding member 40 also includes a second contact surface 44. The transfer position 41 and the second contact surface 44 are respectively disposed on two sides of the first contact surface 43. The second contact surface 44 may be connected to the second end of the first contact surface 43.

The second contact surface 44 is an arc-shaped surface. When the feeding member 40 rotates from the receiving position to the dropping position by a preset angle, the second contact surface 44 blocks the first discharge outlet 22. When the second contact surface 44 blocks the first discharge outlet 22, the solid detergent near the first discharge outlet 22 in the first dispensing channel 20 closely contacts the second contact surface 44. When the feeding member 40 rotates, the second contact surface 44 drives the solid detergent in close contact with it to rotate, thereby driving other solid detergents stored in the first dispensing channel 20 to move, further reducing possibility of jamming of the solid detergent.

Further, in an embodiment of the present invention, the housing 10 is provided with a first stop structure 11. When the feeding member 40 is located at the dropping position, the first stop structure 11 abuts against the feeding member 40. The housing 10 is provided with a second stop structure 12. When the feeding member 40 is located at the receiving position, the second stop structure 12 abuts against the feeding member 40. The feeding member 40 reciprocally swings between the first stop structure 11 and the second stop structure 12.

In this embodiment, the housing 10 has an accommodating space 13 for accommodating movement of the feeding member 40. The feeding member 40 is approximately fan-shaped. A shape of the accommodating space 13 may be approximately the same as a shape of the feeding member 40. An approximately fan-shaped structural design of the housing 10 and the feeding member 40 may reduce space occupation within an overall machine.

The first stop structure 11 and the second stop structure 12 form a physical limit for swinging of the feeding member 40, thereby ensuring that the feeding member 40 swings within a predetermined angular range. This not only ensures that the feeding member 40 accurately reaches the receiving position or the dropping position, but also prevents mechanical damage caused by excessive swinging of the feeding member 40.

Further, in an embodiment of the present invention, a dregs leakage port 14 is arranged at a bottom of the accommodating space 13. The solid detergent dispensing apparatus 1 also includes a waste residue box. The waste residue box is disposed below the dregs leakage port 14 and is used for receiving waste residue leaking from the dregs leakage port 14.

In an embodiment, the waste residue box may be taken out from outside. The users may directly take out the waste residue box from the outside to clean the waste residue.

During an operation of the solid detergent dispensing apparatus 1, the solid detergent may be pulverized. A technical solution of this embodiment solves a problem of pulverized residue that may occur in gaps on both sides of the feeding member 40 and a bottom cavity of the housing 10, thereby solving a problem of jamming of the feeding member 40 or the push rod 61 caused by accumulation of pulverized residue.

Powder of the solid detergent may directly fall into the waste residue box at the bottom through the dregs leakage port 14, thereby keeping the solid detergent dispensing apparatus 1 clean, avoiding mechanical jamming caused by powder accumulation, and improving reliability and a service life of the equipment.

Further, in this embodiment, the first dispensing channel 20 is an inclined channel relative to a horizontal plane.

The first dispensing channel 20 may accommodate at least one row of the solid detergent. The solid detergent is spherical or tablet-shaped.

In the solid detergent dispensing apparatus 1 shown in FIG. 2 and FIG. 3, the first dispensing channel 20 may accommodate one row of the solid detergent. A shape and size of the solid detergent may be adapted to an inner diameter of the first dispensing channel 20 and a capacity of the transfer position 41.

The solid detergent may be stored inside the inclined first dispensing channel 20. Under the action of gravity, the solid detergent easily slides down along the first dispensing channel 20 and enters the transfer position 41, thereby reducing a risk of jamming of the solid detergent.

The first dispensing channel 20 may accommodate one row of the solid detergent, and the first dispensing channel 20 is inclined, so that the solid detergent can be evenly distributed in the first dispensing channel 20, thereby avoiding poor feeding caused by local accumulation. Moreover, this design can also make the solid detergent slide more smoothly during a sliding process, thereby reducing friction with a channel wall, further reducing possibility of jamming of the solid detergent, and playing an important role in improving dispensing efficiency of the solid detergent and reducing a risk of jamming.

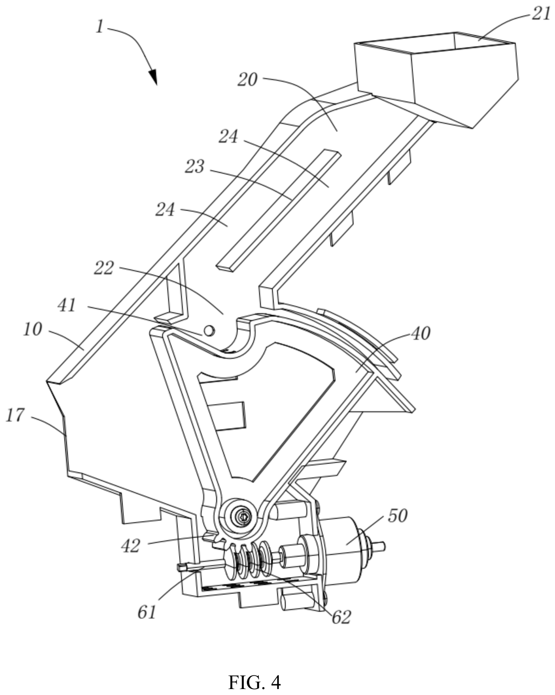

Further, with reference to FIG. 4, in another embodiment of the present invention, a partition plate 23 is disposed inside the first dispensing channel 20. The partition plate 23 extends along a conveying direction of the solid detergent in the first dispensing channel 20. The partition plate 23 divides the first dispensing channel 20 into at least two sub-channels 24. The sub-channel 24 is used for accommodating one row of the solid detergent.

In this embodiment, each sub-channel 24 is used for accommodating one row of the solid detergent, i.e., the first dispensing channel 20 may accommodate at least two rows of the solid detergent, providing a relatively large internal capacity. Moreover, the partition plate 23 is arranged inside the first dispensing channel 20 for separation and diversion, and mutual extrusion between solid detergents is reduced through a diversion effect, which may further reduce a risk of jamming of the solid detergent, thereby ensuring smooth dispensing of the solid detergent.

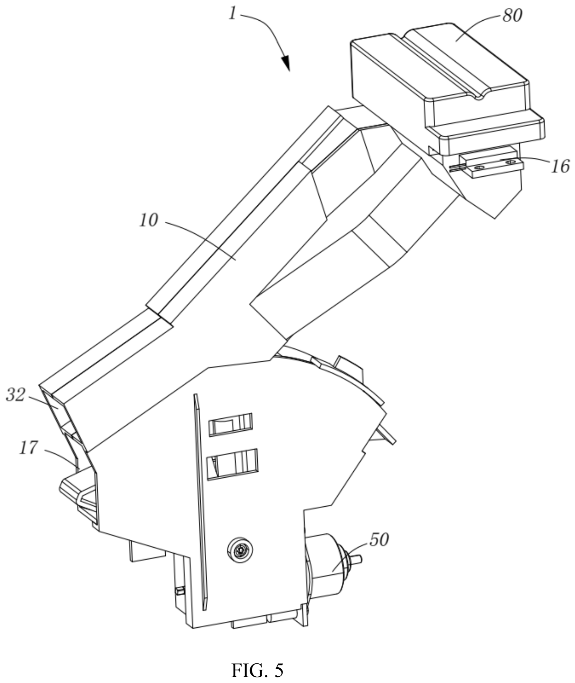

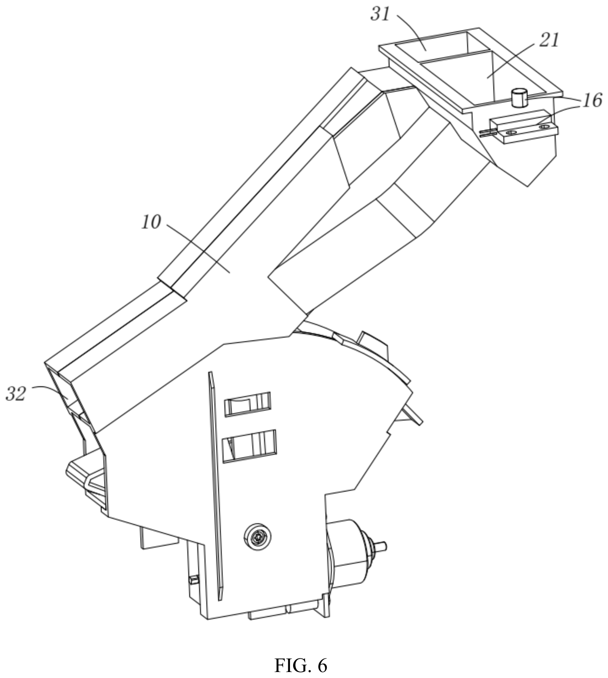

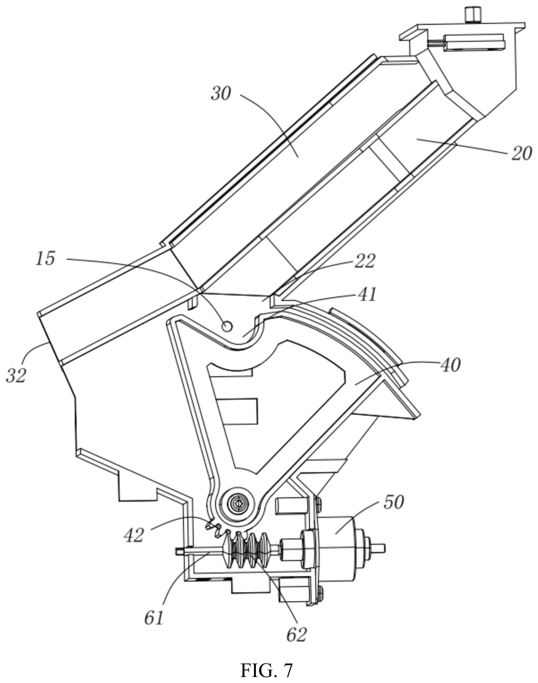

With reference to FIG. 5 to FIG. 7, a solid detergent dispensing apparatus 1 according to a second embodiment provided by the present invention is shown.

A main difference between the solid detergent dispensing apparatus 1 of this embodiment and the solid detergent dispensing apparatus 1 of the first embodiment is that, based on the solid detergent dispensing apparatus 1 provided in the first embodiment, a second dispensing channel 30 is further added.

For ease of description, same or similar elements in this embodiment as those in the first embodiment are denoted by same reference numerals, and details are not described again herein.

In this embodiment, the solid detergent dispensing apparatus 1 also includes the second dispensing channel 30. The second dispensing channel 30 is independent from and arranged side by side with the first dispensing channel 20.

The second dispensing channel 30 includes a second feed inlet 31 and a second discharge outlet 32. The second discharge outlet 32 corresponds in position to the target cleaner. The second discharge outlet 32 may be arranged side by side with the dropping port 17 of the housing 10.

Specifically, the second dispensing channel 30 is an inclined channel relative to a horizontal plane. The solid detergent dispensed from the second feed inlet 31 into the second dispensing channel 30 falls into the target cleaner via the second discharge outlet 32 under its own gravity.

In this embodiment, users may dispense the solid detergent into the first dispensing channel 20 via the first feed inlet 21. Moreover, the first dispensing channel 20 may store the solid detergent. When it is necessary to clean the beverage machine, the motor 50 of the solid detergent dispensing apparatus 1 operates, thereby automatically dispensing the solid detergent into the target cleaner via the feeding member 40.

Furthermore, users may also manually dispense the solid detergent into the target cleaner via the second dispensing channel 30. When the solid detergent stored in the first dispensing channel 20 is exhausted or malfunctions such as jamming occur, the users may dispense the solid detergent into the second dispensing channel 30 via the second feed inlet 31. The solid detergent may directly fall into the target cleaner from the second discharge outlet 32 of the second dispensing channel 30.

In this embodiment, the first dispensing channel 20 and the second dispensing channel 30 may be used for dispensing a same type of solid detergent or different types of solid detergent.

In a technical solution provided by this embodiment, the solid detergent dispensing apparatus 1 simultaneously possesses two methods for dispensing the solid detergent: manual dispensing and automatic dispensing, thereby greatly improving applicability and flexibility of the apparatus. When the first dispensing channel 20 for the automatic dispensing of the solid detergent, the feeding member 40, or other related components malfunction, or when the solid detergent in the first dispensing channel 20 is exhausted, users may continue to use the apparatus through the manual dispensing method, thereby avoiding potential usage interruptions caused by a single dispensing method.

Coexistence of automatic dispensing and manual dispensing functions enhances flexibility and reliability of the solid detergent dispensing apparatus 1. The second dispensing channel 30 serves as a backup channel, thereby allowing users to supplement the solid detergent as needed in special circumstances. This not only improves user experience but also enhances practicality of the solid detergent dispensing apparatus.

Further, in an embodiment of the present invention, the solid detergent dispensing apparatus 1 also includes a first sensor 15. At the receiving position, the first sensor 15 is triggered. The first sensor 15 is used for detecting whether the solid detergent is stored in the transfer position 41. The first sensor 15 may be a photoelectric sensor, such as a single-sided optocoupler or a through-beam optocoupler.

In this embodiment, the solid detergent dispensing apparatus 1 also includes a cover body 80. The cover body 80 is used for opening and closing the second feed inlet 31.

The solid detergent dispensing apparatus 1 also includes a second sensor 16. The second sensor 16 is used for detecting whether the cover body 80 opens the second feed inlet 31.

In an embodiment, the second sensor 16 includes a reed switch fixed to the housing 10 and a magnet fixed to the cover body 80. When the reed switch senses the magnet, it can be determined that the cover body 80 closes the second feed inlet 31. When the reed switch does not sense the magnet, it may be determined that the cover body 80 opens the second feed inlet 31.

In this embodiment, the control module is used to generate a reminder signal for manual dispensing of the solid detergent when the first sensor 15 detects that the solid detergent is not stored in the transfer position 41, and to determine that the manual dispensing of the solid detergent is completed when the second sensor 16 detects that the cover body 80 opens the second feed inlet 31.

In this embodiment, when the first sensor 15 detects that there is the solid detergent in the transfer position 41, the solid detergent dispensing apparatus 1preferentially selects the automatic dispensing of the solid detergent and does not remind for the manual dispensing. However, if the first sensor 15 detects that there is no solid detergent, it is indicated that the solid detergent may be used up or jammed in the first dispensing channel 20, and the solid detergent dispensing apparatus 1reminds for the manual dispensing of the solid detergent. In this way, flexibility and reliability of the solid detergent dispensing apparatus 1 are improved. The second dispensing channel 30, as a backup channel, not only enhances user experience but also improves practicality of the solid detergent dispensing apparatus 1.

By monitoring a state of the linear stepper motor 50, it is determined whether the feeding member 40 has reset to the receiving position. The first sensor 15 is triggered for detection only after the feeding member 40 resets to the receiving position, thereby avoiding continuous detection and false detection.

Moreover, by detecting opening and closing status of the cover body 80, it is determined whether users have opened the second feed inlet 31. When the users open the second feed inlet 31, it is determined that the users have dispensed the solid detergent through the second dispensing channel 30, so that the beverage machine may be controlled to execute a cleaning program. Detection of opening and closing of the cover body 80 may enable detection and judgment of the manual dispensing by the users, thereby facilitating guidance of subsequent execution of the cleaning program and ensuring that the beverage machine can promptly perform internal cleaning after each manual dispensing. In this way, this not only improves safety of the solid detergent dispensing apparatus 1 but also further enhances user experience.

A technical solution provided in this embodiment further improves operational stability of the solid detergent dispensing apparatus 1, thereby ensuring that the solid detergent is dispensed into the target cleaner before the cleaning program is executed, allowing the cleaning program to operate normally and guaranteeing cleaning effect.

In an embodiment, the solid detergent dispensing apparatus 1 also includes a third sensor. The third sensor is disposed at an inlet of the target cleaner and is used for detecting whether the solid detergent has entered the target cleaner through the inlet of the target cleaner. The third sensor may be a photoelectric sensor.

When the third sensor detects that the solid detergent has passed through the inlet of the target cleaner, the beverage machine may be controlled to execute the cleaning program. A technical solution of this embodiment may ensure that the solid detergent is dispensed into the target cleaner, thereby guaranteeing that the executed cleaning program is performed using a cleaning solution formed by dissolving the solid detergent.

Further, in an embodiment of the present invention, the first feed inlet 21 and the second feed inlet 31 are arranged side by side. The cover body 80 has a closed position for closing the first feed inlet 21 and the second feed inlet 31, a first open position for opening the first feed inlet 21 and closing the second feed inlet 31, and a second open position for opening the second feed inlet 31 and closing the first feed inlet 21.

In this embodiment, by providing the cover body 80, the first feed inlet 21 and the second feed inlet 31 can be simultaneously closed, thereby preventing foreign objects from entering the first dispensing channel 20 or the second dispensing channel 30, which may cause blockages or affect cleaning effect.

Furthermore, the cover body 80 may selectively open one of the first feed inlet 21 and the second feed inlet 31. That is, the first feed inlet 21 and the second feed inlet 31 cannot be opened simultaneously, thereby preventing users from dispensing the solid detergent from both the first dispensing channel 20 and the second dispensing channel 30 at the same time, which could lead to an excessive amount of solid detergent falling into the target cleaner.

In an embodiment of the present invention, the cover body 80 is slidably arranged. Specifically, the cover body 80 is slidably connected to the housing 10, and the cover body 80 may slide to one of the closed position, the first open position, and the second open position.

In this embodiment, the cover body 80 is a sliding cover. The sliding cover has a magnet, and the magnet on the sliding cover may trigger a reed switch on the housing 10. When the cover body 80 is not in the closed position, a prompt message may be issued to remind users to close the cover body 80, thereby preventing foreign objects or dust from falling into the target cleaner and affecting hygiene of a beverage.

The housing 10 may be provided with a limit structure. When the cover body 80 slides from the closed position to the first open position, the limit structure can restrict the cover body 80 from sliding further along an original sliding direction. Similarly, when the cover body 80 slides from the closed position to the second open position, the limit structure can restrict the cover body 80 from sliding further along that sliding direction.

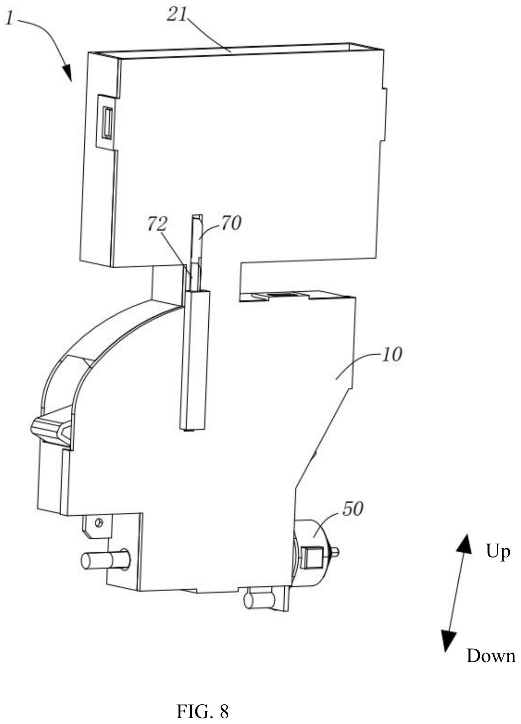

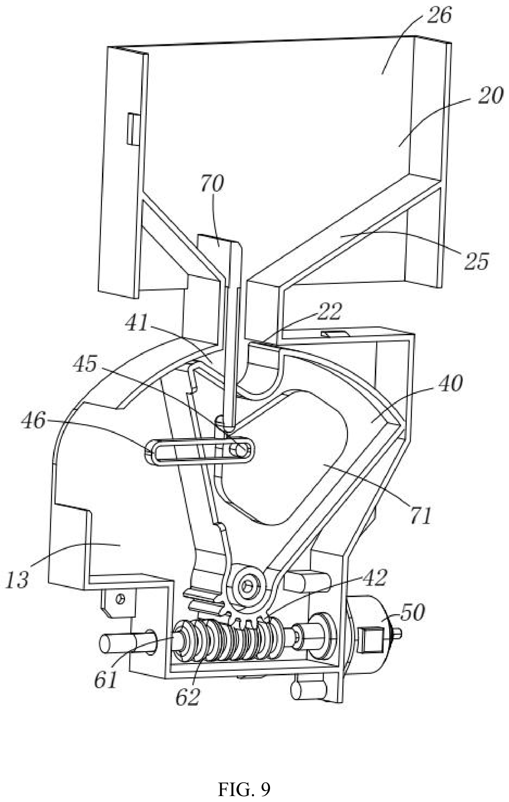

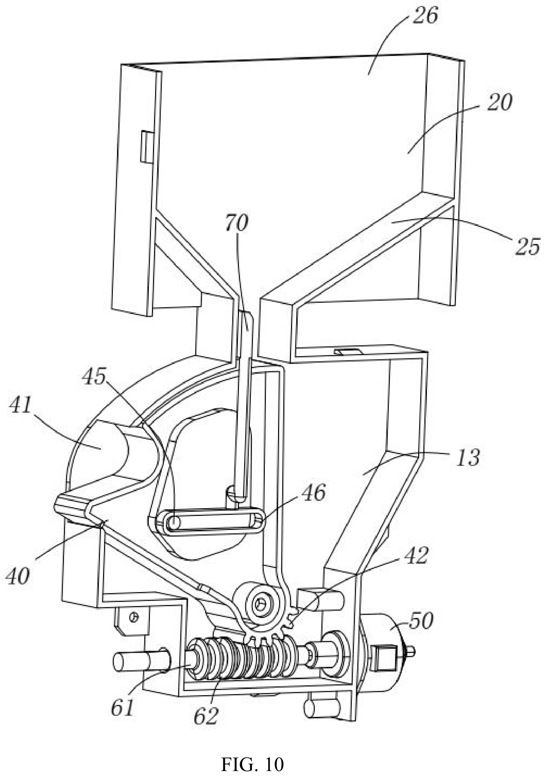

With reference to FIG. 8 to FIG. 10, a solid detergent dispensing apparatus 1 according to a third embodiment provided by the present invention is shown.

Compared to the solid detergent dispensing apparatus 1 of the first embodiment or the second embodiment, a main difference of the solid detergent dispensing apparatus 1 of this embodiment lies in a structure of the first dispensing channel 20.

In this embodiment, the first dispensing channel 20 includes a tapered section 25 tapering from top to bottom. The tapered section 25 is used for accommodating the solid detergent. The first discharge outlet 22 is disposed at a lower end of the tapered section 25.

In an embodiment, the tapered section 25 is conical. The first dispensing channel 20 also includes an accommodating portion 26 disposed above the tapered section 25, and the accommodating portion 26 may be cuboid-shaped. The first feed inlet 21 may be provided at an upper end of the accommodating portion 26. The first feed inlet 21 and the first discharge outlet 22 may be arranged opposite each other.

The first dispensing channel 20 provided in this embodiment may store more solid detergents, thereby extending usage time of the solid detergent in the apparatus and reducing frequency with which users need to supplement the solid detergent.

The first dispensing channel 20 has the tapered section 25 that is wider at the top and narrower at the bottom, thereby allowing the solid detergent to enter the transfer position 41 of the feeding member 40 more smoothly and reducing possibility of jamming of the solid detergent.

Moreover, an opening of the first dispensing channel 20 is relatively large. When the solid detergent is jammed, it is convenient to clean with tools such as pliers, thereby improving maintenance convenience of the apparatus.

In an embodiment, the solid detergent dispensing apparatus 1 also includes an agitating member 70. At least a portion of the agitating member 70 is disposed in the tapered section 25. The feeding member 40 is in transmission connection with the agitating member 70, and reciprocating swing of the feeding member 40 can drive the agitating member 70 to perform reciprocating motion.

In this embodiment, by providing the agitating member 70 linked with the feeding member 40, the agitating member 70 is driven to move up and down during rotation of the feeding member 40, thereby causing the agitating member 70 to agitate the solid detergent in the first dispensing channel 20. This may effectively prevent the solid detergent in the first dispensing channel 20 from being squeezed at the first discharge outlet 22, thereby avoiding jamming of the solid detergent in the first dispensing channel 20. The reciprocating motion of the agitating member 70 can agitate the solid detergent in the tapered section 25, thereby ensuring that the solid detergent can move downward smoothly.

Furthermore, a design of the agitating member 70 can also promote uniform distribution of the solid detergent in the first dispensing channel 20, thereby preventing uneven dispensing caused by local accumulation. A material of the agitating member 70 is preferably wear-resistant and non-polluting to the solid detergent, such as stainless steel or special plastic, to ensure long-term stability and reliability. Through a linkage design of the agitating member 70 and the feeding member 40, not only is an apparatus structure simplified, but efficiency and stability of the solid detergent dispensing are also improved, thereby providing users with more convenient and efficient user experience.

Further, in an embodiment, the feeding member 40 is in transmission connection with the agitating member 70 via a cam transmission mechanism 71.

In this embodiment, the cam transmission mechanism 71 includes a first connection structure 45 disposed on the feeding member 40, a second connection structure 46 disposed on the agitating member 70, and a guide groove 72 disposed on the housing 10. The first connection structure 45 cooperates with the second connection structure 46. At least a portion of the agitating member 70 is disposed in the guide groove 72 to reciprocally move along an extension direction of the guide groove 72.

One of the first connection structure 45 and the second connection structure 46 includes a connection groove, and the other of the first connection structure 45 and the second connection structure 46 includes a connection protrusion. The connection protrusion is disposed in the connection groove and may move along an extension direction of the connection groove. The extension direction of the connection groove is different from the extension direction of the guide groove 72.

In an embodiment, the first connection structure 45 is the connection protrusion, and the second connection structure 46 is the connection groove. The guide groove 72 extends in a vertical direction. The extension direction of the connection groove is perpendicular to both the extension direction of the guide groove 72 and a rotation axis direction of the feeding member 40. Reciprocating swing of the feeding member 40 may drive the agitating member 70 to move up and down reciprocally.

In this embodiment, reciprocating swing motion of the feeding member 40 is converted into reciprocating motion of the agitating member 70 via the cam transmission mechanism 71. Further, by precisely designing a cooperation relationship between the connection groove and the connection protrusion, as well as a shape and size of the guide groove 72, a movement trajectory of the agitating member 70 can be ensured to be stable and controllable, thereby achieving effective agitation of the solid detergent. An overall structure is simple, with few components, small space occupation, and reliable operation.

It should be understood that although this specification is described according to embodiments, not every embodiment contains only an independent technical solution. This narrative method of the specification is only for clarity. Those skilled in the art should consider the specification as a whole. The technical solutions in embodiments may also be appropriately combined to form other embodiments understandable to those skilled in the art.

A series of detailed descriptions listed above are only specific explanations of feasible embodiments of the present invention. They are not intended to limit the protection scope of the present invention. Equivalent embodiments or modifications made without departing from the present invention should be included within the protection scope of the present invention.

## Claims

1. A solid detergent dispensing apparatus (1), applied to a beverage machine, and **characterized by** comprising:
a housing (10);
a first dispensing channel (20), wherein the first dispensing channel (20) is configured to convey a solid detergent, and the first dispensing channel (20) has a first feed inlet (21) and a first discharge outlet (22);
a feeding member (40), wherein the feeding member (40) is rotatably connected within the housing (10), the feeding member (40) is provided with a transfer position (41), and the feeding member (40) has a receiving position and a dropping position; when the feeding member (40) is in the receiving position, the transfer position (41) corresponds in position to the first discharge outlet (22), and the solid detergent in the first dispensing channel (20) is conveyed from the first discharge outlet (22) into the transfer position (41); and when the feeding member (40) is in the dropping position, the transfer position (41) corresponds in position to a target cleaner of the beverage machine, and the solid detergent in the transfer position (41) falls into the target cleaner;
a motor (50), disposed on the housing (10); and
a transmission mechanism, wherein the transmission mechanism is driven by the motor (50), the transmission mechanism is in transmission connection with the feeding member (40) for driving the feeding member (40) to reciprocally swing between the receiving position and the dropping position.

2. The solid detergent dispensing apparatus (1) according to claim 1, wherein the transmission mechanism comprises a push rod (61) driven by the motor (50), the push rod (61) is provided with a first tooth portion (62), the feeding member (40) is provided with a second tooth portion (42), and the first tooth portion (62) meshes with the second tooth portion (42).

3. The solid detergent dispensing apparatus (1) according to claim 1 or 2, wherein the motor (50) is configured as a linear stepper motor; and
the solid detergent dispensing apparatus (1) further comprises a control module for acquiring an operating state of the motor (50) and determining position information of the feeding member (40) according to the operating state of the motor (50).

4. The solid detergent dispensing apparatus (1) according to claim 1, wherein the feeding member (40) comprises a first contact surface (43), the first contact surface (43) has a first end connected to the transfer position (41) and a second end opposite to the first end, and the first contact surface (43) is inclined towards the transfer position (41); and when the feeding member (40) is in the receiving position, the first contact surface (43) at least partially blocks the first discharge outlet (22), and the second end is higher than the first end;
preferably, the feeding member (40) further comprises a second contact surface (44), the transfer position (41) and the second contact surface (44) are respectively disposed on two sides of the first contact surface (43), and the second contact surface (44) is an arc-shaped surface; and when the feeding member (40) rotates a preset angle from the receiving position towards the dropping position, the second contact surface (44) blocks the first discharge outlet (22).

5. The solid detergent dispensing apparatus (1) according to claim 1, wherein the housing (10) is provided with a first stop structure (11), and when the feeding member (40) is located at the dropping position, the first stop structure (11) abuts against the feeding member (40); the housing (10) is provided with a second stop structure (12), and when the feeding member (40) is located at the receiving position, the second stop structure (12) abuts against the feeding member (40); and the feeding member (40) reciprocally swings between the first stop structure (11) and the second stop structure (12).

6. The solid detergent dispensing apparatus (1) according to claim 1, wherein the housing (10) has an accommodating space (13) for accommodating movement of the feeding member (40), a bottom of the accommodating space (13) is provided with a dregs leakage port (14); and the solid detergent dispensing apparatus (1) further comprises a waste residue box, the waste residue box is disposed below the dregs leakage port (14) for receiving waste residue leaking from the dregs leakage port (14).

7. The solid detergent dispensing apparatus (1) according to any one of claims 1 to 6, wherein the first dispensing channel (20) is an inclined channel relative to a horizontal plane; the first dispensing channel (20) is further configured to accommodate at least one row of the solid detergent; and the solid detergent is spherical or tablet-shaped.

8. The solid detergent dispensing apparatus (1) according to claim 7, wherein the first dispensing channel (20) is provided with a partition plate (23), the partition plate (23) extends along a conveying direction of the solid detergent in the first dispensing channel (20), the partition plate (23) divides the first dispensing channel (20) into at least two sub-channels (24), and the sub-channel (24) is configured to accommodate one row of the solid detergent.

9. The solid detergent dispensing apparatus (1) according to any one of claims 1 to 6, wherein the first dispensing channel (20) comprises a tapered section (25) tapering from top to bottom, the tapered section (25) is configured to accommodate the solid detergent, and the first discharge outlet (22) is disposed at a lower end of the tapered section (25); and the solid detergent dispensing apparatus (1) further comprises an agitating member (70), at least a portion of the agitating member (70) is disposed in the tapered section (25), the feeding member (40) is in transmission connection with the agitating member (70), and reciprocating swinging of the feeding member (40) drives the agitating member (70) to perform reciprocating motion.

10. The solid detergent dispensing apparatus (1) according to claim 9, wherein the feeding member (40) is in transmission connection with the agitating member (70) via a cam transmission mechanism (71), the cam transmission mechanism (71) comprises a first connection structure (45) disposed on the feeding member (40), a second connection structure (46) disposed on the agitating member (70), and a guide groove (72) disposed on the housing (10); the first connection structure (45) cooperates with the second connection structure (46), at least a portion of the agitating member (70) is disposed in the guide groove (72) to reciprocally move along an extending direction of the guide groove (72); one of the first connection structure (45) and the second connection structure (46) comprises a connection groove, the other of the first connection structure (45) and the second connection structure (46) comprises a connection protrusion, and the connection protrusion is disposed in the connection groove and moves along an extending direction of the connection groove; and the extending direction of the connection groove is different from the extending direction of the guide groove (72).

11. The solid detergent dispensing apparatus (1) according to any one of claims 1 to 6, further comprising a second dispensing channel (30), wherein the second dispensing channel (30) is independent from and arranged side by side with the first dispensing channel (20), the second dispensing channel (30) comprises a second feed inlet (31) and a second discharge outlet (32), the second discharge outlet (32) corresponds in position to the target cleaner, and the solid detergent dispensed into the second dispensing channel (30) from the second feed inlet (31) falls into the target cleaner via the second discharge outlet (32).

12. The solid detergent dispensing apparatus (1) according to claim 11, further comprising:
a first sensor (15), wherein the first sensor (15) is triggered at the receiving position, and the first sensor (15) is configured to detect whether the solid detergent is stored in the transfer position (41);
a cover body (80), wherein the cover body (80) is configured to open and close the second feed inlet (31);
a second sensor (16), configured to detect whether the cover body (80) opens the second feed inlet (31); and
a control module, configured to generate a reminder signal for manual dispensing of the solid detergent when the first sensor (15) detects that the solid detergent is not stored in the transfer position (41), and to determine that the manual dispensing of the solid detergent is completed when the second sensor (16) detects that the cover body (80) opens the second feed inlet (31).

13. The solid detergent dispensing apparatus (1) according to claim 11, further comprising a cover body (80), wherein the first feed inlet (21) and the second feed inlet (31) are arranged side by side, and the cover body (80) has a closed position for closing the first feed inlet (21) and the second feed inlet (31), a first open position for opening the first feed inlet (21) and closing the second feed inlet (31), and a second open position for opening the second feed inlet (31) and closing the first feed inlet (21); and the cover body (80) is slidably disposed and slides to one of the closed position, the first open position, and the second open position.

14. The solid detergent dispensing apparatus (1) according to any one of claims 1 to 6, further comprising a third sensor, wherein the third sensor is disposed at an inlet of the target cleaner and is configured to detect whether the solid detergent has entered the target cleaner through the inlet of the target cleaner.

15. A beverage machine, **characterized by** comprising a main unit, wherein a target cleaner is provided inside the main unit, the solid detergent dispensing apparatus (1) according to any one of claims 1 to 14 is provided on the main unit, and the solid detergent dispensing apparatus (1) is configured to dispense a solid detergent into the target cleaner.
